# EUROPÄISCHE PATENTSCHRIFT

(11) **EP 2 162 401 B1**
(45) Veröffentlichungstag und Bekanntmachung des Hinweises auf die Patenterteilung: **22.03.2017**
(21) Anmeldenummer: 08759130.1
(22) Anmeldetag: 10.06.2008
(51) Int. Cl.: C02F 1/76, C02F 101/38, C02F 103/04, C01B 11/20, C02F 1/28, C02F 1/32, C02F 1/42, C02F 1/44, C02F 1/72

(54) **AUFBEREITUNG VON WASSER MIT HYPOBROMITLÖSUNG**
TREATMENT OF WATER WITH HYPOBROMITE SOLUTION
TRAITEMENT D'EAU PAR UNE SOLUTION D'HYPOBROMITE

(30) Priorität: 29.06.2007 DE 102007031113
(43) Veröffentlichungstag der Anmeldung: 17.03.2010
(73) Patentinhaber: Christ Water Technology AG, 5310 Mondsee (AT)
(72) Erfinder: KOLIOS, Grigorios, 79540 Lörrach (DE); JOHANN, Jürgen, 69226 Nussloch (DE); BISSEN, Monique, A-5310 Mondsee (AT); MÜLLER, Andreas, 79576 Weil am Rhein (DE)
(74) Vertreter: Patentanwälte Ruff, Wilhelm, Beier, Dauster & Partner mbB
(86) Internationale Anmeldenummer: PCT/EP2008/004602
(87) Internationale Veröffentlichungsnummer: WO 2009/003572

(56) Entgegenhaltungen:
- JP-A- 9 038 670
- JP-A- 10 309 588
- US-A- 5 516 501

## Beschreibung

Die Erfindung betrifft ein Verfahren zur Aufbereitung von Wasser, insbesondere zur Herstellung von Reinstwasser, bei dem ein Wasserstrom durch mehrere Aufbereitungsstufen geführt wird, in denen im Wasser enthaltene anorganische und/oder organische Spezies abgetrennt werden. Des weiteren betrifft die Erfindung eine Wasseraufbereitungsanlage zur Durchführung eines solchen Verfahrens.

Die Aufbereitung von Wasser ist in der heutigen Zeit von stetig steigender Bedeutung, insbesondere im Bereich der Trinkwassergewinnung sowie bei der Herstellung hochreiner Prozeßwässer. Besonders hohe Anforderungen an die Wasserreinheit werden insbesondere im letzteren Fall gestellt, beispielsweise im Falle von Prozesswässern, die bei der Produktion von Halbleitern benötigt werden. So wird in der Halbleiterproduktion zur Spülung von Siliziumwafern, insbesondere nach Ätzprozessen, Wasser mit einem extrem hohen Reinheitsgrad benötigt.

Ausgangspunkt zur Herstellung des benötigten hochreinen Wassers ist häufig Oberflächenwasser, beispielsweise Flußwasser. Dieses wird in einem mehrstufigen Prozess, umfassend einen Vorbehandlungsabschnitt, einen sogenannten "Make-up"-Abschnitt und einen sogenannten "Polishing"-Abschnitt, aufgereinigt. Die Vorbehandlung umfasst in der Regel insbesondere einen oder mehrere Filtrationsvorgänge zur Entfernung feiner Partikel, einen Flockungsschritt zur Entfernung von Kolloidstoffen und sehr feinen Schmutzpartikeln, eine Entkeimung, eine Enthärtung und eine Entsalzung des Rohwassers. Anschließend wird das so behandelte Wasser im Make-up-Abschnitt entgast, entionisiert und UVbehandelt. Eine weitere UV-Behandlung kann beim Polishing vorgesehen sein. Darüber hinaus umfaßt das Polishing in der Regel weitere Entionisierungsprozesse sowie mindestens einen Ultrafiltrationsschritt.

Das aufzubereitende Rohwasser enthält in der Regel organische Bestandteile bzw. Verunreinigungen, die bei der Aufbereitung weitestgehend entfernt werden sollen. Gelegentlich kann der Gesamtgehalt an organischen Bestandteilen im Rohwasser sogar einen Wert von 5 ppm (parts per million) überschreiten.

Für Wasser, das in der Halbleiterproduktion eingesetzt werden soll, wird in der Regel ein Wert von maximal ca. 1 ppb (parts per billion) an organisch gebundenem Kohlenstoff ("total organic carbon", kurz TOC) angestrebt. Besonderes Augenmerk liegt dabei auf der Entfernung stickstoffhaltiger organischer Verbindungen, insbesondere von Harnstoff und Harnstoffderivaten, da sich diese in der Halbleiterproduktion als besonders störend erwiesen haben. Insbesondere niedermolekulare stickstoffhaltige organische Verbindungen lassen sich aber in konventionellen Wasseraufbereitungsprozessen erfahrungsgemäß nur sehr schlecht entfernen.

Oberflächenwasser weist häufig eine sehr hohe Konzentration an stickstoffhaltigen organischen Verbindungen auf, insbesondere in landwirtschaftlich intensiv genutzten Regionen. In diesen Regionen ist die Konzentration an stickstoffhaltigen organischen Verbindungen im Oberflächenwasser vor allem durch den intensiven Einsatz von stickstoffbasiertem Dünger erhöht.

Rydzewski et al. (Ultrapure water® November 2003, Seiten 20-26) schlagen vor, einem Wasserstrom zur Entfernung von stickstoffhaltigen organischen Verbindungen, insbesondere von Harnstoff, Natriumbromid und Ozon zuzusetzen. Durch das Ozon wird ein Teil des zugesetzten Natriumbromids oxidiert, es entsteht Hypobromit, das wiederum mit stickstoffhaltigen organischen Verbindungen reagieren und diese so in einen Zustand überführen kann, in dem sie aus dem Wasserstrom leichter entfernbar sind. Das Ozon und das Natriumbromid werden dazu separat dem Wasserstrom zugesetzt, wobei gemäß Rydzewski et al. die Natriumbromid-Zugabe der Ozon-Eindosierung vorgeschaltet sein muss, um eine optimale Durchmischung der beiden Komponenten im Wasserstrom zu erreichen. Rydzewski et al. konnten zeigen, dass sich so tatsächlich der Anteil an stickstoffhaltigen organischen Verbindungen in einem Wasserstrom wirksam reduzieren lässt. Allerdings kamen sie in ihren Untersuchungen zu dem Ergebnis, dass sich eine effiziente Verringerung dieses Anteils nur durch eine außerordentlich hohe Hypobromit-Konzentration erreichen lässt (für einen Harnstoffabbau von 25 ppb auf 5 ppb wird eine Hypobromit-Konzentration von ca. 20 ppm empfohlen). Entsprechend schlagen sie vor, Natriumbromid und Ozon dem Wasserstrom in sehr hohen Mengen zuzusetzen, was natürlich die ionische Gesamtfracht des Wasserstroms nachteiligerweise stark ansteigen lässt. Nachgeschaltete Trennstufen werden nämlich durch die eingetragene ionische Fracht zum Teil erheblich belastet. Darüber hinaus können hohe Konzentrationen des starken Oxidationsmittels Hypobromit erhebliche Materialprobleme verursachen. Insbesondere bei Ozon handelt es sich zudem um ein relativ teures Reagens, es muss unmittelbar vor seinem Einsatz unter hohem apparativem Aufwand frisch erzeugt werden. Auch unter wirtschaftlichen Gesichtspunkten ist die von Rydzewski et al. vorgeschlagene Vorgehensweise daher optimierbar.

Die Abtrennung von stickstoffhaltigen organischen Verbindungen aus einem Wasserstrom mittels Hypobromit ist auch Thema der JP 09094585. Aus dieser ist es bekannt, einem aufzubereitenden Wasserstrom Natriumbromid und Natriumhypochlorit in Kombination mit einem Flockungsmittel zuzusetzen. Natriumhypochlorit ist ebenso wie Ozon dazu in der Lage, das Bromid zu Hypobromit zu oxidieren. In einem ersten Schritt werden dem Wasserstrom das Flockungsmittel und das Natriumbromid zugesetzt. Erst nach Abtrennung der ausgeflockten Substanzen mittels eines Filters wird in einem weiteren Schritt das Natriumhypochlorit in den Wasserstrom separat eindosiert. Diese Vorgehensweise erscheint allerdings bereits deswegen nicht optimal, weil ein Flockungsschritt in aller Regel in einem sehr frühen Stadium eines Wasseraufbereitungsprozesses vorgenommen wird, nämlich im Rahmen der Vorbehandlung (s.o.). In diesem frühen Stadium weist der aufzubereitende Wasserstrom noch eine hohe Kontamination durch Verunreinigungen aller Art auf. Eine gezielte Umsetzung stickstoffhaltiger organischer Verunreinigungen mit Hypobromit ist daher nicht möglich, was zur Folge hat, dass Hypobromit in sehr hohen Konzentrationen erzeugt werden muss, um deren effiziente Entfernung zu gewährleisten.

Auch in der JPH09-038670 wird die Verwendung von Hypobromit zur Entfernung stickstoffhaltiger Verbindungen aus Wasserströmen beschrieben. Hierzu wird aufzubereitendem Wasser Bromid und Hypochlorit zugegeben.

Der vorliegenden Erfindung liegt die Aufgabe zugrunde, eine technische Lösung zur Aufbereitung von Wasser, insbesondere zur Herstellung von Reinstwasser, bereitzustellen, in der vor allem der Aspekt des gezielten Abbaus stickstoffhaltiger organischer Verbindungen berücksichtigt ist. Die erfindungsgemäße Lösung soll gegenüber aus dem Stand der Technik bekannten Vorgehensweisen bei zumindest gleicher Effizienz insbesondere wirtschaftlicher sein.
Diese Aufgabe wird gelöst durch das Verfahren mit den Merkmalen des Anspruchs 1 sowie die Wasseraufbereitungsanlage mit den Merkmalen des Anspruchs 12.
Bevorzugte Ausführungsformen des erfindungsgemäßen Verfahrens finden sich in den abhängigen Ansprüchen 2 bis 11.
Bevorzugte Ausgestaltungen der erfindungsgemäßen Wasseraufbereitungsanlage sind in den abhängigen Ansprüchen 13 bis 16 definiert. Der Wortlaut sämtlicher Ansprüche wird durch Bezugnahme zum Inhalt dieser Beschreibung gemacht.

Ein erfindungsgemäßes Verfahren dient der Aufbereitung von Wasser und ist insbesondere zur Herstellung von Reinstwasser geeignet. Bei dem Verfahren wird ein Wasserstrom durch mehrere Aufbereitungsstufen geführt, in denen im Wasser enthaltene anorganische und/oder organische Spezies abgetrennt werden.

Insbesondere dient das erfindungsgemäße Verfahren der Aufbereitung von Wasser, das stickstoffhaltige organische Verbindungen wie Harnstoff als Verunreinigungen enthält.

Besonders zeichnet sich das erfindungsgemäße Verfahren dadurch aus, dass dem Wasserstrom in mindestens einer der Stufen eine wässrige Hypobromitlösung zugesetzt wird. Das erfindungsgemäße Verfahren unterscheidet sich vom oben angeführten Stand der Technik also dadurch, dass dem aufzubereitenden Wasserstrom keine Einzelkomponenten zugesetzt werden, die erst nach Durchmischung im Wasserstrom miteinander zu Hypobromit reagieren. Stattdessen wird dem Wasserstrom eine Lösung zugesetzt, die bereits Hypobromit enthält. Vorzugsweise ist die Hypobromit-Bildung in der Hypobromitlösung im Wesentlichen bereits vollständig abgeschlossen. Bevorzugt lässt sich im Wasserstrom unmittelbar nach der Zugabe der Hypobromitlösung eine maximale Konzentration an Hypobromit ermitteln, die stromabwärts nicht mehr überschritten wird. Die Hypobromitlösung wird dem Wasserstrom vorzugsweise kontinuierlich zugesetzt.
Überraschenderweise hat sich herausgestellt, dass durch Einführung dieser Maßnahme bei zumindest gleichbleibender Effizienz im Hinblick auf den Abbau stickstoffhaltiger organischer Verbindungen im Wasserstrom das stöchiometrische Verhältnis von eingesetzten Chemikalien zu abzubauenden stickstoffhaltigen organischen Verbindungen im Vergleich zu den aus dem Stand der Technik bekannten Verfahren deutlich gesenkt werden kann. Dies könnte darauf zurückzuführen sein, dass bei separater Zudosierung von Einzelkomponenten, bespielsweise von Natriumbromid und Ozon bzw. Natriumhypochlorit gemäß Rydzewski et al. bzw. gemäß der JP 09094585, die Reaktion zur Erzeugung des Hypobromits stark verlangsamt abläuft (bzw. insbesondere bei niedrigem pH-Wert auch sehr unvollständig abläuft), da die Einzelkomponenten im Wasserstrom in großer Verdünnung vorliegen. Entsprechend langsam und unvollständig erfolgt in beiden Fällen die Bildung von Hypobromit, dessen Konzentration unmittelbar nach der Zugabe der Einzelkomponenten noch bei Null liegt. Gemäß dem vorliegend beschriebenen Verfahren wird dem Wasserstrom dagegen eine Hypobromitlösung zugesetzt, die sofort wirksam ist.

Unter einer Hypobromitlösung soll im Rahmen der vorliegenden Anmeldung allgemein eine wässrige Lösung verstanden werden, die OBr⁻-Ionen und/oder HOBr aufweist. Mit dem Begriff "Hypobromit" sind vorliegend entsprechend HOBr und/oder OB⁻-Ionen gemeint.

Die Hypobromitlösung wird erfindungsgemäß bevorzugt durch Reaktion von Bromid-Ionen aus mindestens einem anorganischen Bromid mit mindestens einem Oxidationsmittel, das in der Lage ist, die BromidIonen zu oxidieren, hergestellt. Die Umsetzung mit dem mindestens einen Oxidationsmittel erfolgt vorzugsweise in Wasser. Als anorganisches Bromid können grundsätzlich alle anorganischen Bromverbindungen eingesetzt werden, die sich unter Bildung von Bromid-Ionen in Wasser lösen, also beispielsweise auch Bromwasserstoff. Vorzugsweise handelt es sich bei dem mindestens einen anorganischen Bromid um mindestens ein salzartiges Bromid, insbesondere um mindestens ein Alkali- und/oder Erdalkalibromid. Bei dem mindestens einen Alkali- und/oder Erdalkalibromid handelt es sich in besonders bevorzugten Ausführungsformen um Natriumbromid. Bei dem mindestens einen Oxidationsmittel handelt es sich vorzugsweise um eine Hypochloritverbindung, insbesondere um Natriumhypochlorit. Letzteres ist insbesondere auch aus Kostengründen bevorzugt, da es beispielsweise im Vergleich zu Ozon relativ billig ist.

Bevorzugt wird die Hypobromitlösung möglichst unmittelbar vor der Zugabe zum Wasserstrom hergestellt. Dies ist insbesondere deshalb zweckmäßig, weil Hypobromit aus chemischer Sicht nicht sehr stabil ist. In wässriger Lösung kann es sehr schnell zu Bromid und Bromat disproportionieren.

Wie eingangs bereits angesprochen, werden durch das dem Wasserstrom zugesetzte Hypobromit im Wasser enthaltene stickstoffhaltige organische Verunreinigungen mindestens teilweise oxidiert und können in der Folge aus dem Wasserstrom leicht entfernt werden. Insbesondere Harnstoff lässt sich gut mit Hypobromit umsetzen. Dabei entstehen unter anderem molekularer Stickstoff sowie Kohlendioxid, die sich als Gase relativ leicht entfernen lassen (s. Formel I):

CO(NH₂)₂ + 3 OBr⁻ → N₂ + CO₂ + 3 Br⁻ + 2 H₂O (Formel I)

Die bei der Umsetzung entstehenden Bromid-Ionen können (ggf. zusammen mit weiteren im Zusammenhang mit der Hypobromit-Behandlung in den Wasserstrom eingebrachten Ionen wie z.B. überschüssigen Bromid-Ionen aus dem eingesetzten anorganischen Bromid oder Chlorid-Ionen aus eingesetztem Hypochlorit) in nachfolgenden Aufbereitungsstufen ebenfalls leicht entfernt werden.

Die wässrige Hypobromitlösung wird vor ihrer Zugabe zum Wasserstrom vorzugsweise in einem zur Erzeugung von Hypobromit geeigneten Reaktionsbehälter hergestellt (auf den Reaktionsbehälter wird später noch eingegangen). In den Reaktionsbehälter kann beispielsweise Wasser aus einem separaten Wasserreservoir eingespeist werden, dem das mindestens eine anorganische Bromid und das mindestens eine Oxidationsmittel zudosiert werden. Das mindestens eine anorganische Bromid und/oder das mindestens eine Oxidationsmittel können beispielsweise aus getrennten Speicherbehältern zudosiert werden, in denen die Reaktanden als wässrige Lösungen vorliegen. Auch eine Zudosierung als Feststoff ist jeweils denkbar, im Falle des Oxidationsmittels gegebenenfalls auch als Gas.

In besonders bevorzugten Ausführungsformen des erfindungsgemäßen Verfahrens wird dem aufzubereitenden Wasserstrom jedoch als wässrige Hypobromitlösung ein bromidionenhaltiger Trägerstrom zugeführt, dem vor Einspeisung in den aufzubereitenden Wasserstrom das mindestens eine Oxidationsmittel zugesetzt wird. Die Zugabe des Oxidationsmittels erfolgt wie bei obiger Verfahrensvariante bevorzugt in oder vor einem zur Erzeugung von Hypobromit geeigneten Reaktionsbehälter, in dem dann die im Trägerstrom enthaltenen Bromid-Ionen mindestens teilweise zu Hypobromit oxidiert werden.

Der Trägerstrom wird vorzugsweise mindestens teilweise, insbesondere vollständig, aus mindestens einer Aufbereitungsstufe gespeist, die stromabwärts der mindestens einen Stufe nachgeschaltet ist, in der die Hypobromitlösung dem Wasserstrom zugesetzt wird.

Besonders bevorzugt wird der Trägerstrom aus mindestens einer der bereits erwähnten stromabwärts angeordneten Aufbereitungsstufen gespeist, in der oder in denen die im Zusammenhang mit der Hypobromit-Behandlung in den Wasserstrom eingebrachten Ionen wieder entfernt werden. Vorzugsweise handelt es sich dabei um mindestens eine Revers-Osmose-Stufe.

In Weiterbildung ist es bevorzugt, dass der Trägerstrom mit Retentat aus der mindestens einen Revers-Osmose-Stufe gespeist wird. In dem Retentat sind die zu entfernenden Ionen konzentriert, darunter vorliegend insbesondere auch Bromid-Ionen. Dem Trägerstrom müssen in dieser Ausführungsform ensprechend Bromid-Ionen nicht zwingend separat zugesetzt werden. Stattdessen weist er bereits einen Anteil an BromidIonen auf, der gegebenenfalls durch Zugabe des mindestens einen anorganischen Bromids lediglich ergänzt werden muss. Der Gesamtverbrauch an dem mindestens einen anorganischen Bromid kann entsprechend sehr gering gehalten werden, was sich sehr positiv auf die Wirtschaftlichkeit des erfindungsgemäßen Verfahrens auswirken kann. In weiteren bevorzugten Ausführungsformen des erfindungsgemäßen Verfahrens kann der Trägerstrom auch mit Retentat aus der mindestens einer Revers-Osmose-Stufe gespeist werden, das in einem mit Br⁻-Ionen beladenen Anionenaustauscher behandelt wurde. In dem Anionenaustauscher können beispielsweise im Retentat enthaltene Chlorid-Ionen entfernt und durch Bromid-Ionen ersetzt werden. Dies ist beispielsweise sinnvoll, wenn als Oxidationsmittel ein Hypochlorit verwendet wird.

Erfindungsgemäß ist es besonders bevorzugt, daß der Wasserstrom nach der Zugabe der Hypobromitlösung einen pH-Wert > 8, vorzugsweise zwischen 8 und 11, insbesondere zwischen 8,5 und 9,5, aufweist. Es wurde festgestellt, dass der Abbau von im Wasserstrom enthaltenen Stickstoffverbindungen in den genannten Bereichen besonders effizient verläuft. Der pH-Wert des Wasserstroms wird vorzugsweise ausschließlich durch die Zugabe einer entsprechenden Menge an Hypobromitlösung gesteuert. Natürlich ist es aber auch möglich, den pH-Wert durch gezielte Eindosierung von zusätzlicher Lauge oder Säure zu variieren.

Vor der Zugabe der Hypobromitlösung weist der Wasserstrom in aller Regel bevorzugt einen im Wesentlichen neutralen pH-Wert oder einen alkalischen pH-Wert auf, abhängig davon, welche Aufarbeitungsstufe er vor der Zugabe durchlaufen hat.

Der pH-Wert der Hypobromitlösung selbst ist in der Regel ein vergleichsweise unkritischer Faktor. Er liegt bevorzugt im Alkalischen, insbesondere im Bereich zwischen 11,5 und 13, allerdings sind auch Abweichungen denkbar, beispielsweise im Fall der Verwendung von Bromwasserstoff als mindestens eine anorganische Bromid-Verbindung.

Vorzugsweise wird die Hypobromitlösung dem Wasserstrom in einem Volumenverhältnis zwischen 1:10 und 1:30.000, vorzugsweise zwischen 1:100 und 1:10.000, insbesondere zwischen 1:300 und 1:3.000, zugegeben.

Zur Herstellung der Hypobromitlösung wird das mindestens eine Oxidationsmittel mit den Bromid-Ionen aus dem mindestens einen anorganischen Bromid vorzugsweise in einem stöchiometrischen Verhältnis zwischen 0,1 und 10, insbesondere zwischen 0,5 und 2, besonders bevorzugt zwischen 0,8 und 1,5, gemischt und umgesetzt. Diese Bereiche sind insbesondere dann bevorzugt, wenn als anorganisches Bromid ein Alkalibromid, insbesondere Natriumbromid, und als Oxidationsmittel ein Hypochlorit, insbesondere Natriumhypochlorit, eingesetzt wird.

Grundsätzlich wird angestrebt, eine Hypobromitlösung mit einem möglichst hohen Anteil an sogenanntem "freiem Brom" zu erzeugen. Unter "freiem Brom" soll vorliegend die Menge an Brom, insbesondere in Form von HOBr und/oder OBr⁻, verstanden werden, die nach der sogenannten DPD-Methode (siehe unten) bestimmbar ist. Allerdings sollte darauf geachtet werden, dass die Konzentration an freiem Brom in der Lösung einen Wert von 40 g/l nicht überschreitet.

Zur Herstellung der Hypobromitlösung mit einem Hypochlorit als Oxidationsmittel wird die Konzentration an freiem Chlor (analog zur obigen Definition von "freiem Brom" soll unter "freiem Chlor" vorliegend die Menge an Chlor, insbesondere in Form von HOCI und/oder OCl⁻, verstanden werden, die nach der bereits erwähnten DPD-Methode bestimmbar ist) in der Mischung von Oxidationsmittel und dem mindestens einen anorganischen Bromid vorzugsweise auf einen Wert zwischen 0,12 g/l und 120 g/l, insbesondere zwischen 0,3 g/l und 30 g/l, besonders bevorzugt zwischen 1 g/l und 15 g/l, eingestellt. In der Regel korelliert die Menge an freiem Chlor unmittelbar mit der Menge an zugegebenem Hypochlorit.

Die DPD-Methode ist dem Fachmann bekannt. Gemäß dieser Methode werden zur Bestimmung der Konzentration an freiem Chlor bzw. freiem Brom in einer Lösung das freie Brom und das freie Chlor mit DPD (N,N-Diethyl-1,4-phenylendiamin) umgesetzt. Die Konzentration der entstehenden Verbindung kann photometrisch bestimmt werden, beispielsweise mit einem Photometer vom Typ "Swan Chematest 20s" der Firma Swan Analytische Instrumente AG, Schweiz. Das freie Chlor kann vor der Zugabe von DPD chemisch maskiert werden, so dass das zugegebene DPD nur noch mit dem (unmaskierten) freien Brom reagiert. Die Konzentration an freiem Brom ist so unmittelbar bestimmbar während die Bestimmung der Konzentration an freiem Chlor durch anschließende Differenzbildung erfolgen kann.

Vorzugsweise lässt man bei der Hypobromit-Herstellung das mindestens eine Oxidationsmittel auf die Bromid-Ionen aus dem mindestens einen anorganischen Bromid zwischen 30 und 3000 Sekunden, vorzugsweise zwischen 60 und 600 Sekunden, insbesondere zwischen 120 und 300 Sekunden, einwirken, insbesondere in dem oben bereits erwähnten zur Erzeugung von Hypobromit geeigneten Reaktionsbehälter. Nach Ablauf dieser Zeit hat sich in der Regel ein Gleichgewicht zwischen den Reaktanden und entstandenem Hypobromit gebildet, die Hypobromitbildung ist also im Wesentlichen abgeschlossen.

Im Wasserstrom selbst ist es erfindungsgemäß vorgesehen, die Konzentration an freiem Brom grundsätzlich so niedrig wie möglich zu halten. Allerdings ist aus kinetischen Gründen die Einstellung einer ausreichend hohen Hypobromit-Konzentration notwendig. Die erforderlichen Konzentrationswerte hängen natürlich nicht zuletzt von der Konzentration der zu entfernenden Stickstoffverbindungen im Wasserstrom ab. In aller Regel ist es bevorzugt, in dem Wasserstrom durch die Zugabe der Hypobromitlösung eine Konzentration an freiem Brom von nicht mehr als 10 mg/l, vorzugsweise zwischen 1 mg/l und 10 mg/l, insbesondere zwischen 2 mg/l und 5 mg/l, einzustellen. Bei diesen Konzentrationen läuft die Reaktion nach Formel (I) in der Regel schnell genug ab. Zudem ist bei diesen Konzentrationen mit Materialproblemen in Folge des oxidativen Potentials der Bromverbindungen in der Regel nicht zu rechnen.

Gemäß der vorliegenden Erfindung wird das stöchiometrische Verhältnis von freiem Brom zu organischen Stickstoffverbindungen im Wasserstrom auf einen Wert grösser 2:1 und kleiner 50:1, bevorzugt zwischen 2:1 und 20:1, insbesondere zwischen 2:1 und 10:1, besonders bevorzugt zwischen 5:1 und 10:1, eingestellt. Eine effiziente Entfernung organischer Stickstoffverbindungen bei einer derart niedrigen Konzentration an freiem Brom ist aus dem Stand der Technik bislang nicht bekannt.

Vorzugsweise wird dem mit der Hypobromitlösung versetzten Wasserstrom nach einer Wirkzeit ein Reduktionsmittel zugegeben, das insbesondere in der Lage ist, Hypobromit- und Hypochlorit-Ionen zu reduzieren. Durch die Zugabe des Reduktionsmittels sollen insbesondere überschüssiges Hypobromit und Hypochlorit zu Bromid- und Chlorid-Ionen reduziert werden. Diese besitzen keine korrosive Wirkung mehr, insbesondere gegenüber polymeren Materialien, und können in nachgeordneten Aufbereitungsstufen leicht entfernt werden.

Bei der erwähnten Wirkzeit handelt es sich um die Zeit, in der man das dem Wasserstrom zugesetzte Hypobromit auf die im Wasserstrom enthaltenen organischen Stickstoffverbindungen einwirken lässt. Vorzugsweise beträgt die Wirkzeit zwischen 1 Minute und 1 Stunde, insbesondere zwischen 2 Minuten und 30 Minuten, besonders bevorzugt zwischen 10 Minuten und 20 Minuten.

Bei dem Reduktionsmittel handelt es sich in besonders bevorzugten Ausführungsformen um Wasserstoffperoxid. Wasserstoffperoxid ist besonders geeignet, da es als nichtionische Verbindung praktisch "rückstandsfrei" mit Hypobromit bzw. mit Hypochlorit abreagieren kann. Gegebenenfalls überschüssiges Wasserstoffperoxid kann in einer Folgestufe problemlos, beispielsweise mittels UV-Bestrahlung, entfernt werden. Alternativ oder zusätzlich zu dem Wasserstoffperoxid können dem Wasserstrom als Reduktionsmittel beispielsweise auch reduzierende Schwefelverbindungen, beispielsweise Thiosulfate oder insbesondere auch Natriumbisulfit (Na₂S₂O₅), zugesetzt werden.

Ein nicht unwichtiger Aspekt des erfindungsgemäßen Verfahrens ist die Positionierung der Hypobromitbehandlungsstufe innerhalb des Gesamtverfahrens zur Wasseraufbereitung. Demnach umfasst ein erfindungsgemäßes Verfahren einen Vorbehandlungsabschnitt, einen Make-up-Abschnitt und einen Polishing-Abschnitt, wie sie eingangs bereits beschrieben wurden. Innerhalb dieser Kette wird die wässrige Hypobromitlösung vorzugsweise am Ende des Vorbehandlungsabschnitts oder am Anfang des Make-up-Abschnitts dem aufzubereitenden Wasserstrom zugesetzt. So sind der Zugabe der Hypobromitlösung als Aufbereitungsstufen mindestens eine Filtration des Wasserstroms mit einem Multimediafilter (insbesondere zum Abtrennen ausgeflockter Verunreinigungen) und/oder mindestens eine Filtration des Wasserstroms mit einem Aktivkohlefilter und/oder mindestens eine Behandlung in einem Ionenaustauscher und/oder mindestens eine Revers-Osmose-Stufe vorgeordnet, alle diese Stufen insbesondere innerhalb des Vorbehandlungsabschnitts. Der Zugabe der Hypobromitlösung (sowie vorzugsweise auch der Zugabe des mindestens einen Reduktionsmittels) nachgeordnet ist mindestens eine Revers-Osmose-Stufe (wie bereits oben erwähnt) und vorzugsweise mindestens eine Entgasungsbehandlung und/oder mindestens eine UV-Behandlung und/oder mindestens eine Behandlung in einem Ionenaustauscher (insbesondere in einem Mischbett-Ionenaustauscher) und/oder mindestens eine Ultrafiltration. Durch eine derartige Positionierung wird gewährleistet, dass zum Zeitpunkt der Zugabe der Hypobromitlösung der aufzubereitende Wasserstrom bereits von einem wesentlichen Teil der ursprünglich enthaltenen Verunreinigungen befreit ist. Dies hat den Vorteil, daß die Reaktion der im Wasser enthaltenen organischen Stickstoffverbindungen mit dem Hypobromit weitgehend unbeeinträchtigt durch weitere ionische und nicht-ionische Inhaltsstoffe erfolgen kann, so dass die Hypobromitkonzentration relativ niedrig gehalten werden kann.

Eine erfindungsgemäße Wasseraufbereitungsanlage dient insbesondere zur Durchführung des oben beschriebenen Verfahrens. Sie umfaßt ein oder mehrere Mittel zur Abtrennung anorganischer und/oder organischer Spezies aus einem Wasserstrom. Besonders zeichnet sich eine erfindungsgemäße Wasseraufbereitungsanlage durch mindestens eine Vorrichtung zur Erzeugung von Hypobromitlösung aus, welche über mindestens eine Hypobromit-Zuleitung mit dem Wasserstrom verbunden ist.

Die Vorrichtung zur Erzeugung von Hypobromitlösung weist vorzugsweise mindestens einen zur Erzeugung von Hypobromit geeigneten Reaktionsbehälter und/oder mindestens einen Speicherbehälter für mindestens ein anorganisches Bromid und/oder mindestens einen Speicherbehälter für mindestens ein Oxidationsmittel, das die Eigenschaft besitzt, das mindestens eine anorganische Bromid zu oxidieren, auf. Die Speicherbehälter sind über eine oder mehrere Zuleitungen mit dem Reaktionsbehälter verbunden. Betreffend bevorzugte Ausführungsformen des mindestens einen anorganischen Bromids und des mindestens einen Oxidationsmittels kann auf die entsprechenden voranstehenden Ausführungen verwiesen werden. Vorzugsweise liegen das mindestens eine anorganische Bromid und das mindestens eine Oxidationsmittel in Form ihrer wässrigen Lösungen in den Speicherbehältern vor. Der mindestens eine Reaktionsbehälter weist vorzugsweise Mittel zur Durchmischung dieser wässrigen Lösungen auf.

In dem mindestens einen Reaktionsbehälter erfolgt die Oxidation des mindestens einen anorganischen Bromids zu Hypobromit. Die Verweilzeit der Mischung aus anorganischem Bromid und Oxidationsmittel in dem Reaktor beträgt vorzugsweise zwischen 30 und 3000 Sekunden, wie oben bereits definiert.

Vorzugsweise weist eine erfindungsgemäße Wasseraufbereitungsanlage mindestens einen Speicherbehälter für mindestens ein Reduktionsmittel auf, insbesondere für ein Reduktionsmittel, das in der Lage ist, Hypobromit und Hypochlorit zu reduzieren. Dabei ist der mindestens eine Speicherbehälter für das Reduktionsmittel vorzugsweise über mindestens eine Reduktionsmittel-Zuleitung stromabwärts hinter der mindestens einen Hypobromit-Zuleitung mit dem Wasserstrom verbunden. Betreffend bevorzugte Ausführungsformen des mindestens einen Reduktionsmittels kann ebenfalls auf entsprechende voranstehende Ausführungen verwiesen werden.
Besonders bevorzugt weist eine erfindungsgemäße Wasseraufbereitungsanlage einen Oxidationsreaktor auf, der stromabwärts hinter der Hypobromit-Zuleitung und vor der Reduktionsmittel-Zuleitung angeordnet ist. In dem Oxidationsreaktor erfolgt im Wesentlichen die Umsetzung der oben erwähnten stickstoffhaltigen organischen Verbindungen mit dem dem Wasserstrom zugegebenen Hypobromit. Über die oben definierte Wirkzeit lässt man im Oxidationsreaktor das Hypobromit auf die Stickstoffverbindungen einwirken. Der mindestens eine Oxidationsreaktor kann Mittel zur Durchmischung des Wasserstroms aufweisen, um einen effizienten Abbau der Stickstoffverbindungen zu gewährleisten.

Erfindungsgemäß weist eine erfindungsgemäße Anlage als Mittel zur Abtrennung anorganischer und/oder organischer Spezies aus dem Wasserstrom mindestens eine Filtrationseinrichtung und/oder mindestens eine Ionenaustauschereinrichtung und/oder mindestens eine Revers-Osmose-Einrichtung auf, die stromaufwärts vor der Hypobromit-Zuleitung angeordnet ist bzw. sind.

Weiterhin weist eine erfindungsgemäße Anlage als Mittel zur Abtrennung anorganischer und/oder organischer Spezies aus dem Wasserstrom mindestens eine Revers-Osmose-Einrichtung und bevorzugt mindestens eine Entgasungseinrichtung und/oder mindestens eine UV-Behandlungseinrichtung und/oder mindestens eine lonenaustauschereinrichtung und/oder mindestens eine Ultrafiltrationseinrichtung aufweist, die stromabwärts hinter der Hypobromit-Zuleitung angeordnet ist bzw. sind.

Als Filtrationseinrichtungen kommen vorliegend insbesondere Multimediafilter und Aktivkohlefilter zum Einsatz. Die mindestens eine lonenaustauschereinrichtung kann sowohl Kationen- und Anionenaustauscher als auch Mischbett-lonenaustauscher umfassen.

Besonders bevorzugt weist eine erfindungsgemäße Wasseraufbereitungsanlage mindestens eine Revers-Osmose-Einrichtung auf, die stromabwärts hinter der mindestens einen Reduktionsmittel-Zuleitung angeordnet ist und die über eine Rückführungsleitung mit der mindestens einen Vorrichtung zur Erzeugung von Hypobromitlösung verbunden ist. Über die Rückführungsleitung kann vorzugsweise bromidhaltiges Retentat als Trägerstrom aus der mindestens einen Revers-Osmose-Einrichtung in den mindestens einen zur Erzeugung von Hypobromit geeigneten Reaktionsbehälter überführt werden. Durch Einbringen von Oxidationsmittel in den Reaktionsbehälter kann das Bromid im Trägerstrom oxidiert werden. Der so erhaltene hypobromithaltige Trägerstrom kann anschließend dem aufzubereitenden Wasserstrom zudosiert werden.

Der stromabwärts hinter der mindestens einen Reduktionsmittel-Zuleitung angeordneten mindestens einen Revers-Osmose-Einrichtung kann eine Filtrationseinrichtung, insbesondere in Form eines Kartuschenfilters, vorgeschaltet sein, in der überschüssiges Reduktionsmittel und/oder Chlor und/oder Brom zersetzt werden kann. Als solche ist insbesondere ein Aktivkohlefilter geeignet.

Weiterhin kann es bevorzugt sein, dass die erfindungsgemäße Anlage einen mit Br⁻-Ionen beladenen Anionenaustauscher zur Aufreinigung des Retentats aus der stromabwärts hinter der mindestens einen Reduktionsmittel-Zuleitung angeordneten Revers-Osmose-Einrichtung aufweist. Der Anionenaustauscher ist zweckmäßigerweise zwischen der Revers-Osmose-Einheit und der mindestens einen Vorrichtung zur Erzeugung von Hypobromitlösung angeordnet. Vor der Einleitung des Trägerstroms in den zur Erzeugung von Hypobromit geeigneten Reaktionsbehälter kann der Trägerstrom mittels des mit Br⁻-Ionen beladenen Anionenaustauschers behandelt werden, so dass beispielsweise ggf. im Trägerstrom enthaltene Cl⁻-Ionen und/oder OH⁻-Ionen durch Br⁻-Ionen ersetzt werden.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform der Erfindung verwirklicht sein. Die beschriebenen besonderen Ausführungsformen dienen lediglich zur Erläuterung und zum besseren Verständnis der Erfindung und sind in keiner Weise einschränkend zu verstehen.

In den Zeichnungen zeigen:
- Fig. 1:: Fliessbild eines Standard-Verfahrens zur Reinstwasserherstellung nach dem aktuellen Stand der Technik (Verfahrensvariante mit doppelstufiger Revers-Osmose).
- Fig. 2:: Fliessbild eines Verfahrensabschnittes einer Ausführungsform eines erfindungsgemäßen Verfahrens zur Herstellung von Reinstwasser.
- Fig. 3:: Fliessbild eines Verfahrensabschnittes einer Ausführungsform eines erfindungsgemäßen Verfahrens zur Herstellung von Reinstwasser (Variante mit partieller Rückführung des Retentats aus einer Revers-Osmose-Stufe und Ionenaustausch über Br⁻-beladenen Ionenaustauscher).

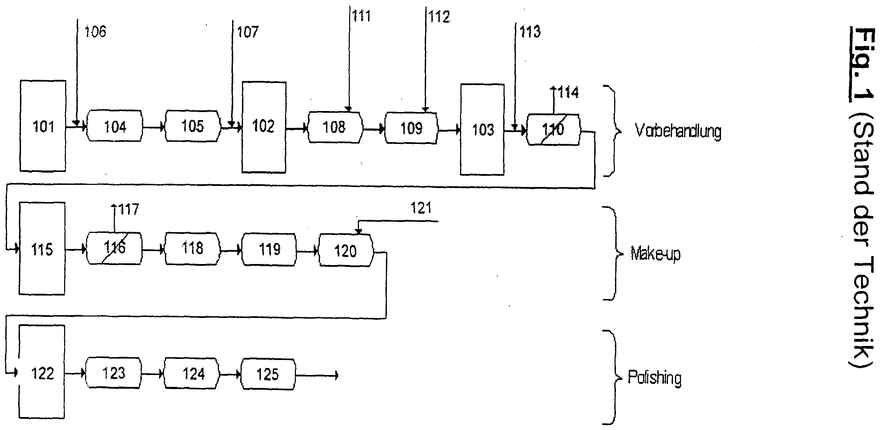

In **Fig. 1** ist ein Standard-Verfahren zur Reinstwasserherstellung nach dem aktuellen Stand der Technik dargestellt. Das Verfahren ist in drei Abschnitte unterteilt, nämlich die Vorbehandlung, das Make-up und das Polishing.

Zur Vorbehandlung wird das aufzubereitende Wasser aus dem Speicher **101** über den Filtratwassertank **102** in den Tank für deionisiertes Wasser **103** überführt. Zwischen dem Speicher **101** und dem Filtratwassertank **102** durchströmt es einen Multimediafilter **104** und einen Aktivkohlefilter **105.** Vor Einleitung in den Multimediafilter **104** kann ihm über die Zuleitung **106** ein Flockungsmittel zugesetzt werden, vor Einleitung in den Filtratwassertank **102** ein Biozid über die Zuleitung **107.** Dem Filtratwassertank **102** nachgeordnet ist der Kationenaustauscher **108** und der Anionenaustauscher **109.** Hinter dem Tank für deionisiertes Wasser **103** wird das Wasser zum Abschluss der Vorbehandlung in eine Revers-Osmose-Einrichtung **110** eingeleitet. Über die Zuleitungen **111, 112** und **113** wird bei Bedarf Säure **(111)** oder Lauge (**112** und **113**) zugesetzt. Über die Ableitung **114** wird Retentat aus der Revers-Osmose-Einrichtung **110** abgeführt. Das vorbehandelte Wasser wird anschließend in den Wasserspeicher **115** überführt.

Zum Make-up wird das Wasser aus dem Reinwasserspeicher **115** in eine weitere Revers-Osmose-Einrichtung **116** geleitet (dargestellt ist hier eine Verfahrensvariante mit doppelstufiger Revers-Osmose, bei Varianten mit einstufiger Revers-Osmose ist lediglich die Revers-Osmose-Einrichtung **110** vorgesehen). Über die Ableitung **117** wird Retentat aus der Revers-Osmose-Einrichtung **116** abgeführt. Nach der Revers-Osmose-Einrichtung **116** wird das Wasser in einer Entgasungseinrichtung **118,** einer UV-Behandlungseinrichtung **119** und in einem Mischbett-Ionenaustauscher **120** behandelt. Über die Zuleitung **121** wird bei Bedarf Säure und/oder Lauge zugesetzt. Das Wasser wird anschließend in den Wasserspeicher **122** überführt.

Zum Polishing wird das Wasser abschließend noch über die UV-Behandlungseinrichtung **123** und den Mischbett-Ionenaustauscher **124** in die Ultrafiltrationseinrichtung **125** überführt. Anschließend kann das Wasser seiner Verwendung zugeführt werden.

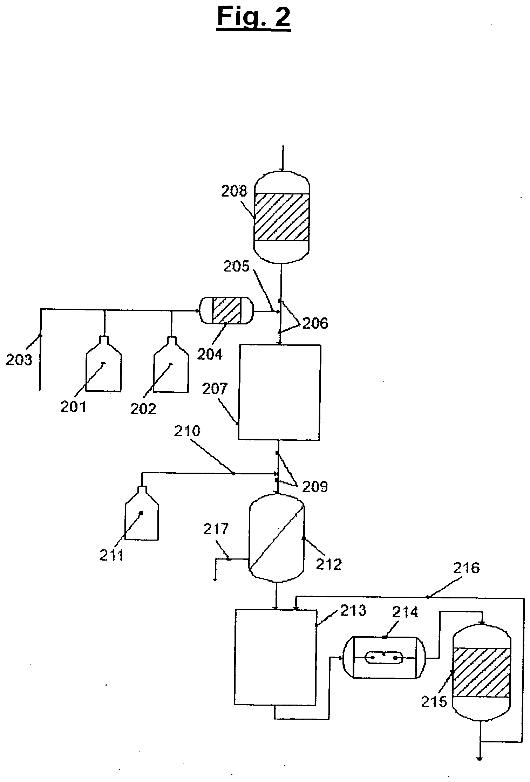

In **Fig. 2** ist ein Verfahrensabschnitt einer Ausführungsform eines erfindungsgemäßen Verfahrens zur Herstellung von Reinstwasser dargestellt. Aus einem Speicherbehälter **201** wird NaOCl als Oxidationsmittel und aus einem Speicherbehälter **202** NaBr einem aus einem nicht dargestellten Reservoir gespeisten Trägerstrom **203** zugeführt, der wiederum in einen zur Erzeugung von Hypobromit geeigneten Reaktionsbehälter **204** geleitet wird. Der Ablauf des Reaktionsbehälters **204** ist über eine Hypobromit-Zuleitung **205** mit dem aufzubereitenden Wasserstrom **206** verbunden, der aus dem Ionenaustauscher **208** austritt. Der Wasserstrom ist bereits weitgehend entionisiert und von natürlichen organischen Verbindungen wie Humin-, Fluvin- und sonstigen organischen Säuren befreit, weist allerdings noch einen Anteil an organischen Stickstoffverbindungen auf. Diese werden im Oxidationsreaktor **207** durch Reaktion mit dem Hypobromit weitestgehend abgebaut. Im Ablauf **209** des Oxidationsreaktors **207** kann H₂O₂ als Reduktionsmittel aus dem Speicherbehälter **211** über die Reduktionsmittel-Zuleitung **210** zudosiert werden. Anschließend wird der Wasserstrom über eine Revers-Osmose-Einrichtung **212,** einen Permeat-Wassertank **213** eine UV-Oxidationseinrichtung **214** und einen Mischbett-Ionenaustauscher **215** geführt. In diesen können die im Rahmen der Hypobromit-Behandlung in den Wasserstrom eingebrachte Ionenfracht sowie Abbauprodukte organischer Stickstoffverbindungen entfernt werden. Ein Teilstrom **216** wird aus dem Ablauf des Mischbett-Ionenaustauschers **215** in den Permeat-Wassertank **213** zurückgeführt. Dadurch ist der Wasserstrom am Eintritt in die UV-Oxidationseinrichtung **214** relativ schwach ionisiert, so dass eine optimale Transmission der UV-Strahlung erzielt wird.

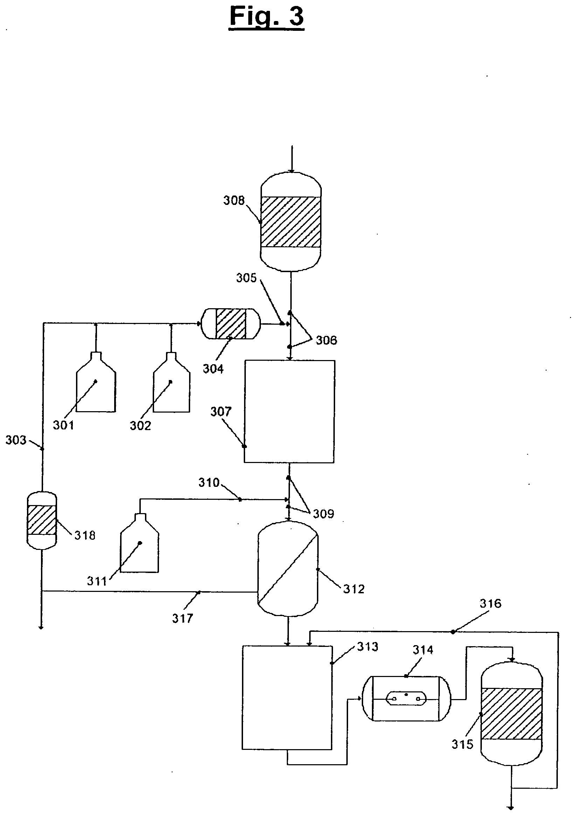

In **Fig. 3** ist ein Verfahrensabschnitt einer weiteren Ausführungsform eines erfindungsgemäßen Verfahrens zur Herstellung von Reinstwasser dargestellt. Diese unterscheidet sich nur in Teilaspekten von der in Fig. 2 dargestellten Ausführungsform. Der Trägerstrom **303** wird nicht aus einem separaten Reservoir gespeist sondern mit Retentat aus der Revers-Osmose-Einrichtung **312.** Dem Trägerstrom wird aus dem Speicherbehälter **301** NaOCl als Oxidationsmittel und aus dem Speicherbehälter **302** NaBr zugesetzt. Anschließend wird er zur Erzeugung von Hypobromit in den Reaktionsbehälter **304** geleitet. Die entstehende Hypobromit-Lösung wird über die Hypobromit-Zuleitung **305** in den aufzubereitenden Wasserstrom **306** dosiert, der aus dem Ionenaustauscher **308** austritt. Im Oxidationsreaktor **307** erfolgt die Reaktion des Hypobromits mit im Wasserstrom enthaltenen organischen Stickstoffverbindungen. Im Ablauf **309** des Oxidationsreaktors **307** wird H₂O₂ als Reduktionsmittel aus dem Speicherbehälter **311** über die Reduktionsmittel-Zuleitung **310** zudosiert. In der dem Oxidationsreaktors **307** nachgeschalteten Revers-Osmose-Einrichtung **312** und dem Mischbett-Ionenaustauscher **315** werden insbesondere die im Rahmen der Hypobromit-Behandlung in den Wasserstrom eingebrachte ionische Fracht sowie Abbauprodukte organischer Stickstoffverbindungen entfernt. Die UV-Oxidationseinrichtung **314** dient insbesondere der weiteren Reduktion des TOC-Gehalts im Wasserstrom. Grundsätzlich wird mit dem Permeat aus der Revers-Osmose-Einrichtung **312** identisch verfahren wie in der in Fig. 2 dargestellten Verfahrensvariante. Das Retentat aus der Revers-Osmose-Einrichtung **312** enthält u.a. Bromid-Ionen und Chlorid-Ionen (aus NaOCl und NaBr). Die Chlorid-Ionen können in dem fakultativen, mit Br⁻-Ionen beladenen Ionenaustauscher **318** entfernt und durch Bromid-Ionen ersetzt werden. Hinter dem Ionenaustauscher **318** weist der Trägerstrom **303** somit im Wesentlichen nur noch Bromid-Ionen auf. Entsprechend der Konzentration an Bromid-Ionen muss dem Trägerstrom **303** weniger NaBr aus dem Speicherbehälter **302** zugesetzt werden.

## Patentansprüche

1. Verfahren zur Aufbereitung von Wasser, insbesondere zur Herstellung von Reinstwasser, bei dem ein Wasserstrom durch mehrere Aufbereitungsstufen geführt wird, in denen im Wasser enthaltene anorganische und/oder organische Spezies abgetrennt werden, **dadurch gekennzeichnet, dass** dem Wasserstrom in mindestens einer der Stufen eine wässrige Hypobromitlösung zugesetzt wird, wobei der Wasserstrom vor der Zugabe der Hypobromitlösung durch mindestens eine Filtrationsstufe und/oder mindestens eine Ionenaustauscherstufe und/oder mindestens eine Revers-Osmose-Stufe und nach der Zugabe der Hypobromitlösung durch mindestens eine Revers-Osmose-Stufe geführt und das stöchiometrische Verhältnis von freiem Brom zu organischen Stickstoffverbindungen im Wasserstrom auf einen Wert grösser 2:1 und kleiner 50:1 eingestellt wird.

2. Verfahren nach Anspruch 1, **dadurch gekennzeichnet, dass** die Hypobromitlösung durch Reaktion von Bromid-Ionen aus mindestens einem anorganischen Bromid mit mindestens einem Oxidationsmittel, das in der Lage ist, das mindestens eine anorganische Bromid zu oxidieren, hergestellt wird.

3. Verfahren nach Anspruch 2, **dadurch gekennzeichnet, dass** dem Wasserstrom als wässrige Hypobromitlösung ein bromidionenhaltiger Trägerstrom zugesetzt wird, dem vor Einspeisung in den Wasserstrom das mindestens eine Oxidationsmittel zugegeben wird.

4. Verfahren nach Anspruch 3, **dadurch gekennzeichnet, dass** der Trägerstrom mindestens teilweise aus einer Aufbereitungsstufe gespeist wird, die stromabwärts der mindestens einen Stufe nachgeordnet ist, in der die Hypobromitlösung dem Wasserstrom zugesetzt wird.

5. Verfahren nach Anspruch 3 oder Anspruch 4, **dadurch gekennzeichnet, dass** der Trägerstrom mit Retentat aus mindestens einer Revers-Osmose-Stufe gespeist wird.

6. Verfahren nach einem der Ansprüche 3 bis 5, **dadurch gekennzeichnet, dass** der Trägerstrom mit Retentat aus mindestens einer Revers-Osmose-Stufe gespeist wird, das in einem mit Br⁻-Ionen beladenen Anionenaustauscher behandelt wurde.

7. Verfahren nach einem der vorhergehenden Ansprüche, **dadurch gekennzeichnet, dass** der Wasserstrom nach dem Zusetzen der Hypobromitlösung einen pH-Wert zwischen 8 und 11, insbesondere zwischen 8,5 und 9,5, aufweist.

8. Verfahren nach einem der vorhergehenden Ansprüche, **dadurch gekennzeichnet, dass** die Hypobromitlösung dem Wasserstrom in einem Volumenverhältnis zwischen 1:10 und 1:30000, vorzugsweise zwischen 1:100 und 1:10000, insbesondere zwischen 1:300 und 1:3000, zugesetzt wird.

9. Verfahren nach einem der vorhergehenden Ansprüche, **dadurch gekennzeichnet, dass** in dem Wasserstrom durch das Zusetzen der Hypobromitlösung eine Konzentration an freiem Brom zwischen 1 mg/l und 10 mg/l, insbesondere zwischen 2 mg/l und 5 mg/l, eingestellt wird.

10. Verfahren nach einem der vorhergehenden Ansprüche, **dadurch gekennzeichnet, dass** dem mit der Hypobromitlösung versetzten Wasserstrom nach einer Wirkzeit ein Reduktionsmittel zugegeben wird, das insbesondere in der Lage ist, Hypobromit-Ionen und Hypochlorit-Ionen zu reduzieren, wobei es sich bei dem Reduktionsmittel bevorzugt um Wasserstoffperoxid handelt.

11. Verfahren nach einem der vorhergehenden Ansprüche, **dadurch gekennzeichnet, dass** der Wasserstrom nach der Zugabe der Hypobromitlösung ferner durch mindestens eine Entgasungsstufe und/oder mindestens eine UV-Behandlungsstufe und/oder mindestens eine Ionenaustauscherstufe und/oder mindestens eine Ultrafiltrationsstufe geführt wird.

12. Wasseraufbereitungsanlage zur Durchführung eines Verfahrens nach einem der vorhergehenden Ansprüche, umfassend mehrere Mittel zur Abtrennung anorganischer und/oder organischer Spezies aus einem Wasserstrom, **gekennzeichnet durch** mindestens eine Vorrichtung zur Erzeugung von Hypobromitlösung, die über mindestens eine Hypobromit-Zuleitung mit dem Wasserstrom verbunden ist, wobei die Anlage als Mittel zur Abtrennung anorganischer und/oder organischer Spezies aus dem Wasserstrom mindestens eine Filtrationsvorrichtung und/oder mindestens eine Ionenaustauschereinrichtung und/oder mindestens eine Revers-Osmose-Einrichtung, die stromaufwärts vor der Hypobromit-Zuleitung angeordnet sind, und als Mittel zur Abtrennung anorganischer und/oder organischer Spezies aus dem Wasserstrom mindestens eine Revers-Osmose-Einrichtung, die stromabwärts hinter der Hypobromit-Zuleitung angeordnet ist, aufweist.

13. Anlage nach Anspruch 12, **dadurch gekennzeichnet, dass** die Vorrichtung zur Erzeugung von Hypobromitlösung vorzugsweise mindestens einen zur Erzeugung von Hypobromit geeigneten Reaktionsbehälter und/oder mindestens einen Speicherbehälter für mindestens ein anorganisches Bromid und/oder mindestens einen Speicherbehälter für mindestens ein Oxidationsmittel aufweist.

14. Anlage nach Anspruch 12 oder 13, **dadurch gekennzeichnet, dass** sie mindestens einen Speicherbehälter für ein Reduktionsmittel aufweist, das in der Lage ist, Hypobromit- und Hypochlorit-Ionen zu reduzieren, der über mindestens eine Reduktionsmittel-Zuleitung mit dem Wasserstrom verbunden ist und/oder einen Oxidationsreaktor, der insbesondere stromabwärts hinter der mindestens einen Hypobromit-Zuleitung und vor der mindestens einen Reduktionsmittel-Zuleitung angeordnet ist.

15. Anlage nach einem der Ansprüche 12 bis 14, **dadurch gekennzeichnet, dass** sie als Mittel zur Abtrennung anorganischer und/oder organischer Spezies aus dem Wasserstrom ferner mindestens eine Entgasungseinrichtung und/oder mindestens eine UV-Behandlungseinrichtung und/oder mindestens eine lonenaustauschereinrichtung und/oder mindestens eine Ultrafiltrationseinrichtung aufweist, die stromabwärts hinter der Hypobromit-Zuleitung angeordnet sind.

16. Anlage nach Anspruch 14oder 15, **dadurch gekennzeichnet, dass** sie mindestens eine stromabwärts hinter der mindestens einen Reduktionsmittel-Zuleitung angeordnete Revers-Osmose-Einrichtung aufweist, die über eine Rückführungsleitung mit der mindestens einen Vorrichtung zur Erzeugung von Hypobromitlösung verbunden ist und/oder einen mit Br⁻-Ionen beladenen Anionenaustauscher, der zwischen der Revers-Osmose-Einrichtung und der mindestens einen Vorrichtung zur Erzeugung von Hypobromitlösung angeordnet ist.

## Claims

1. Method for treating water, in particular for producing ultrapure water, in which a water stream is passed through a plurality of treatment stages in which inorganic and/or organic species which are present in the water are separated off, **characterized in that** an aqueous hypobromite solution is added to the water stream in at least one of the stages, wherein before the addition of the hypobromite solution, the water stream is passed through at least one filtration stage and/or at least one ion-exchange stage and/or at least one reverse osmosis stage, and after the addition of the hypobromite solution, the water stream is passed through at least one reverse osmosis stage, and the stoichiometric ratio of free bromine to organic nitrogen compounds in the water stream is set to a value greater than 2:1 and less than 50:1.

2. Method according to claim 1, **characterized in that** the hypobromite solution is produced by reaction of bromide ions from at least one inorganic bromide with at least one oxidizing agent which is able to oxidize the at least one inorganic bromide.

3. Method according to claim 2, **characterized in that** the aqueous hypobromite solution which is added to the water stream is a bromide-ion-containing carrier stream to which the at least one oxidizing agent is added before it is fed into the water stream.

4. Method according to claim 3, **characterized in that** the carrier stream is fed at least in part from a treatment stage which is arranged downstream of the at least one stage in which the hypobromite solution is added to the water stream.

5. Method according to claim 3 or claim 4, **characterized in that** the carrier stream is fed with retentate from at least one reverse osmosis stage.

6. Method according to any of claims 3 to 5, **characterized in that** the carrier stream is fed with retentate from at least one reverse osmosis stage, which retentate was treated in an anion exchanger loaded with Br⁻ ions.

7. Method according to any of the preceding claims, **characterized in that** the water stream, after the addition of the hypobromite solution, has a pH between 8 and 11, in particular between 8.5 and 9.5.

8. Method according to any of the preceding claims, **characterized in that** the hypobromite solution is added to the water stream in a volumetric ratio between 1:10 and 1:30000, preferably between 1:100 and 1:10000, in particular between 1:300 and 1:3000.

9. Method according to any of the preceding claims, **characterized in that**, by means of the addition of the hypobromite solution, a concentration of free bromine in the water stream of between 1 mg/l and 10 mg/l, in particular between 2 mg/l and 5 mg/l, is established.

10. Method according to any of the preceding claims, **characterized in that** a reducing agent is added after a time of action to the water stream which was admixed with the hypobromite solution, which reducing agent is able, in particular, to reduce hypobromite ions and hypochlorite ions, wherein preferably the reducing agent is hydrogen peroxide.

11. Method according to any of the preceding claims, **characterized in that**, after the addition of the hypobromite solution, the water stream is further passed through at least one degassing stage and/or at least one UV treatment stage and/or at least one ion-exchange stage and/or at least one ultrafiltration stage.

12. Water treatment system for carrying out a method according to any of the preceding claims, comprising a plurality of means for separating off inorganic and/or organic species from a water stream, **characterized by** at least one device for generating hypobromite solution which is connected to the water stream via at least one hypobromite feed line, wherein the system includes as means for separating off inorganic and/or organic species from the water stream at least one filtration unit and/or at least one ion-exchange unit and/or at least one reverse osmosis unit, which are arranged upstream of the hypobromite feed line, and/or as means for separating off inorganic and/or organic species from the water stream at least one reverse osmosis unit, which is arranged downstream of the hypobromite feed line.

13. System according to claim 12, **characterized in that** the device for generating hypobromite solution comprises preferably at least one reaction vessel suitable for generating hypobromite and/or at least one storage vessel for at least one inorganic bromide and/or at least one storage vessel for at least one oxidizing agent.

14. System according to claim 12 or 13, **characterized in that** said system comprises at least one storage vessel for a reducing agent which is able to reduce hypobromite and hypochlorite ions, and said vessel is connected to the water stream via at least one reducing agent feed line, and/or an oxidation reactor which is arranged in particular downstream of the at least one hypobromite feed line and is arranged upstream of the at least one reducing agent feed line.

15. System according to any of claims 12 to 14, **characterized in that** said system further comprises, as means for separating off inorganic and/or organic species from the water stream, at least one degassing unit and/or at least one UV treatment unit and/or at least one ion-exchange unit and/or at least one ultrafiltration unit, which are arranged downstream of the hypobromite feed line.

16. System according to claim 14 or 15, **characterized in that** said system comprises at least one reverse osmosis unit arranged downstream of the at least one reducing agent feed line, which reverse osmosis unit is connected to the at least one device for generating hypobromite solution via a return line, and/or an anion exchanger which is loaded with Br⁻ ions and is arranged between the reverse osmosis unit and the at least one device for generating hypobromite solution.

## Revendications

1. Procédé pour le traitement d'eau, en particulier pour la production d'eau ultrapure, dans lequel on fait passer un courant d'eau par plusieurs étages de traitement dans lesquels on sépare des espèces inorganiques et/ou des espèces organiques contenues dans l'eau, **caractérisé en ce que** dans au moins l'un des étages on ajoute au courant d'eau une solution aqueuse d'hypobromite, en faisant passer le courant d'eau avant l'addition de la solution d'hypobromite par au moins un étage de filtration et/ou au moins un étage d'échangeur d'ions et/ou au moins un étage d'osmose inverse et après l'addition de la solution d'hypobromite par au moins un étage d'osmose inverse et le rapport stoechiométrique du brome libre aux composés azotés organiques dans le courant d'eau étant ajusté à un valeur supérieure à 2:1 et inférieure à 50:1.

2. Procédé selon la revendication 1, **caractérisé en ce que** la solution d'hypobromite est préparée par réaction d'ions bromure provenant d'au moins un bromure inorganique avec au moins un oxydant qui est capable d'oxyder au moins un bromure inorganique.

3. Procédé selon la revendication 2, **caractérisé en ce qu'**on ajoute au courant d'eau, en tant que solution aqueuse d'hypobromite, un courant porteur contenant des ions bromure, auquel ledit au moins un oxydant est ajouté avant l'introduction dans le courant d'eau.

4. Procédé selon la revendication 3, **caractérisé en ce que** le courant porteur est amené au moins en partie à partir d'un étage de traitement qui est placé en aval après ledit au moins un étage dans lequel la solution d'hypobromite est ajoutée au courant d'eau.

5. Procédé selon la revendication 3 ou la revendication 4, **caractérisé en ce que** le courant porteur est alimenté avec du rétentat provenant d'au moins un étage d'osmose inverse.

6. Procédé selon l'une quelconque des revendications 3 à 5, **caractérisé en ce que** le courant porteur est alimenté avec du rétentat provenant d'au moins un étage d'osmose inverse, qui a été traité dans un échangeur d'anions chargé d'ions Br⁻.

7. Procédé selon l'une quelconque des revendications précédentes, **caractérisé en ce que** le courant d'eau présente après l'addition de la solution d'hypobromite un pH compris entre 8 et 11, en particulier entre 8,5 et 9,5.

8. Procédé selon l'une quelconque des revendications précédentes, **caractérisé en ce que** la solution d'hypobromite est ajoutée au courant d'eau en un rapport volumique compris entre 1 : 10 et 1 : 30 000, de préférence entre 1 : 100 et 1 : 10 000, en particulier entre 1 : 300 et 1 : 3 000.

9. Procédé selon l'une quelconque des revendications précédentes, **caractérisé en ce que** dans le courant d'eau on ajuste par l'addition de la solution d'hypobromite une concentration de brome libre comprise entre 1 mg/l et 10 mg/l, en particulier entre 2 mg/l et 5 mg/l.

10. Procédé selon l'une quelconque des revendications précédentes, **caractérisé en ce qu'**après un temps d'action on ajoute au courant d'eau, additionné de la solution d'hypobromite, un réducteur qui est en particulier capable de réduire les ions hypobromite et hypochlorite, le réducteur consistant de préférence en peroxyde d'hydrogène.

11. Procédé selon l'une quelconque des revendications précédentes, **caractérisé en ce qu'**après l'addition de la solution d'hypobromite on fait encore passer le courant d'eau par au moins un étage de dégazage et/ou au moins un étage de traitement UV et/ou au moins un étage d'échangeur d'ions et/ou au moins un étage d'ultrafiltration.

12. Installation de traitement d'eau destinée à la mise en oeuvre d'un procédé selon l'une quelconque des revendications précédentes, comprenant plusieurs moyens pour la séparation d'espèces inorganiques et/ou d'espèces organiques d'un courant d'eau, **caractérisée par** au moins un dispositif destiné à la production de solution d'hypobromite, qui est raccordé au courant d'eau par au moins un conduit d'alimentation en hypobromite, l'installation comportant comme moyens pour la séparation d'espèces inorganiques et/ou d'espèces organiques du courant d'eau au moins un dispositif de filtration et/ou au moins un dispositif échangeur d'ions et/ou au moins un dispositif d'osmose inverse, qui sont placés en amont avant le conduit d'alimentation en hypobromite, et comme moyens pour la séparation d'espèces inorganiques et/ou d'espèces organiques du courant d'eau au moins un dispositif d'osmose inverse qui est placé en aval après le conduit d'alimentation en hypobromite.

13. Installation selon la revendication 12, **caractérisée en ce que** le dispositif destiné à la production de solution d'hypobromite comporte de préférence au moins un récipient de réaction approprié à la production d'hypobromite et/ou au moins un réservoir pour au moins un bromure inorganique et/ou au moins un réservoir pour au moins un oxydant.

14. Installation selon la revendication 12 ou 13, **caractérisée en ce qu'**elle comporte au moins un réservoir pour un réducteur qui est capable de réduire les ions hypobromite et hypochlorite, qui est raccordé au courant d'eau par au moins un conduit d'alimentation en réducteur et/ou un réacteur d'oxydation qui est placé en particulier en aval après ledit au moins un conduit d'alimentation en hypobromite et avant ledit au moins un conduit d'alimentation en réducteur.

15. Installation selon l'une quelconque des revendications 12 à 14, **caractérisée en ce qu'**elle comporte comme moyens pour la séparation d'espèces inorganiques et/ou d'espèces organiques du courant d'eau encore au moins un dispositif de dégazage et/ou au moins un dispositif de traitement UV et/ou au moins un dispositif échangeur d'ions et/ou au moins un dispositif d'ultrafiltration, qui sont placés en aval après le conduit d'alimentation en hypobromite.

16. Installation selon la revendication 14 ou 15, **caractérisée en ce qu'**elle comporte au moins un dispositif d'osmose inverse placé en aval après ledit au moins un conduit d'alimentation en réducteur, qui est raccordé par un conduit de recyclage audit au moins un dispositif destiné à la production de solution d'hypobromite et/ou un échangeur d'anions chargé d'ions Br⁻, qui est placé entre le dispositif d'osmose inverse et ledit au moins un dispositif destiné à la production de solution d'hypobromite.
